(19) Europäisches Patentamt

European Patent Office

Office européen des brevets

(11) Publication number: **0 260 844 B1**

## EUROPEAN PATENT SPECIFICATION

(45) Date of publication of patent specification: **11.11.92**    (51) Int. Cl.⁵: **G01T 1/02**

(21) Application number: **87307750.7**

(22) Date of filing: **02.09.87**

(54) **Detector/dosimeter for gamma and microwave radiation.**

(30) Priority: **17.09.86 CA 518437**

(43) Date of publication of application:
**23.03.88 Bulletin  88/12**

(45) Publication of the grant of the patent:
**11.11.92 Bulletin  92/46**

(84) Designated Contracting States:
**CH DE FR GB IT LI SE**

(56) References cited:
**EP-A- 0 144 120**
**US-A- 4 143 274**

(73) Proprietor: **ATOMIC ENERGY OF CANADA LIMITED**
**275 Slater Street**
**Ottawa Ontario, K1A OR3(CA)**

(72) Inventor: **Ing, Harry**
**9 Sumac Court**
**Deep River Ontario K0J 1P0(CA)**

(74) Representative: **Lambert, Hugh Richmond et al**
**D. YOUNG & CO. 10 Staple Inn**
**London, WC1V 7RD(GB)**

## Description

This invention is concerned with the detection and dose measurement of radiation, particularly gamma radiation, and other low LET (linear energy transfer) radiation, optionally including microwave. The method of detection exploits the fact that stored energy in the form of superheated discrete droplets of a selected high vapour pressure detector liquid can be released when triggered by gamma or in some cases, microwave radiation. The radiation dose can be determined by counting the number of triggered events, manifested as visible vapour pockets or local fractures of flaws in the selected elastic solid in which the droplets are suspended.

There is a need for a radiation detector which can provide an immediate indication of the existence of a low LET radiation field such as gamma rays or of microwaves. The detector should preferably be compact, be sensitive enough to detect radiation levels that are regarded as hazardous to man, give a reading or indication of such a level in an easily interpretable form while the device is being exposed, require no external source of power (such as A.C. supplies or batteries), be reusable so that many measurements can be made on different occasions, and have the capability of storing the totality of readings from many measurements within the detector. Such a detector would find application in various areas of work including research, industrial, medical, environmental, military and civil defence. No existing gamma or microwave detector can meet these specifications.

Existing microwave detectors all require external power supplies for their operation and are therefore unsuitable in this context. A brief review of microwave detectors can be found in reference[1].

Although an enormous number of devices have been used for the detection of gamma rays, the bulk of the common gamma ray detectors operate on three basic principles:

(1) they use electrical power to amplify or collect the radiation-induced events in order to make them detectable, e.g. gaseous counters, scintillation counters and semi-conductor detectors[2];

(2) they use radiation-induced change to a substance which is subsequently processed to yield an indication of the radiation exposure, e.g. thermoluminescent dosimeters[3], photographic emulsions[4], detector based on stimulated electron emission[5], silicon diodes[4], and radiation effects on glass[4] or liquid chemicals[6];

(3) radiation induces change in a substance or device which can be observed directly, e.g. pocket ionization chambers[7], radiochromatic detectors[8] and electrets[9].

Since detectors in category 1 use electrical power, they are unsuitable for the above purposes. Since detectors in category 2 do not give an immediate indication of a radiation field, they need not be considered pertinent. Since gamma ray detectors in category 3 bear some common features with the desired detector, their principles and limitations will be discussed in greater detail.

### Pocket Ionization Chamber

This detector consists of a sealed cylinder e.g. about 10 cm long by 1 cm diameter containing a small ionization chamber as part of the device. The inside wall of the ionization chamber is covered with plastic whose atomic composition approximates human tissue. A tiny fibre is positioned within the chamber so that its exact location is determined by the electric charge residing on the fibre. When the detector is charged, the location of the fibre is farthest away from a reference position corresponding to the uncharged state. To use the detector, the fibre is initially charged so that the fibre is at the 0 position. When the detector is exposed to radiation, ionization of the gas in the chamber causes a reduction in the total charge of the fibre and, consequently, the fibre moves to a position closer to the reference position giving a positive reading. The extent of the movements can be seen against a scale to give quantitative measures of the radiation exposure. When the fibre reaches the reference position, the detector must be recharged in order to be reused. The limitation of this detector is that it requires electrical power to recharge the detector; the procedure for charging the detector is not simple and requires technical training; no lasting record of the reading is available within the detector; the detector is not very sensitive (cannot detect a few millirems accurately because of minute movements of the fibre); and it is not easy to read the detector during exposure because one must peer into the chamber against a lit background in order to see the fibre.

### Radiochromic Detector

This detector consists of a radiochromic dye, usually in the form of a gel, contained within a thin plastic tubing sealed on both ends with clear epoxy. The index of refraction of the plastic tubing is chosen to be smaller than that of the core material so that the device acts as an optical waveguide. Upon irradiation, the

EP 0 260 844 B1

radiochromic dye changes colour and alters the optical properties of the waveguide. The visual appearance of the radiochromic dye after irradiation may be used as a crude indicator of radiation dose. For more accurate dose measurements, the ratios of the transmitted intensities before and after radiation exposure at two different wavelengths of light can be used. The limitation of this detector is mainly inadequate sensitivity. By using the appearance of the radiochromic dye, it is difficult to detect less than 1 rad. The detector is not reusable, although successive exposures are cumulative.

Electrets

Electrets are a di-electric material, such as Teflon (Registered Trade Mark), which can be induced to have a permanent electric charge. This charge is generally a combination of surface charge, space charge and polarization and can be produced by methods such as placing the di-electric material between two electrodes held at a high potential for a certain period of time. The development of polymeric electrets which can maintain a strong field and long term stability created an interest[10] in the use of electrets for radiation dosimetry. In this application, the electret is used in an ionisation chamber as one or both of the electrodes. The ionisation of the gas inside the chamber produces charges which migrate to the electret causing, in effect, an overall reduction of the charge of the electret. Thus, by measuring the charge on the electret before and after the exposure of the chamber to radiation, it is possible to measure the dose received. The limitations of electret dosimeters are that they are still in the development stage: current experimental devices do not provide an immediate reading of dose because they use sophisticated methods of readout (e.g. use of a galvanometer) after an exposure, and long term stability (e.g. several months) and quality control of the dosimeters are not yet solved.

In a previous European Patent Application, EP-A-0 144 120, we described a direct reading detector/dosimeter for neutrons (and other high LET radiation), in which superheated droplets in a solid medium are caused to vaporize explosively by incident neutrons. The resulting vapour bubbles are visible and leave a record in the form of countable bubbles or damaged sites in the solid medium. This neutron detector has most of the characteristics specified above for a desired gamma/microwave detector but is unable to detect gamma and microwave radiation because of the lower energy density produced in the detector medium by the said radiations. Indeed, it was not considered possible at that time to make such a droplet-in-solid medium system sensitive enough to detect gamma and microwave radiation, and, at the same time, be stable enough against spontaneous vaporization to be practical.

However, it has now been found, quite surprisingly, that reading detectors and dosimeters of the kind described in EP-A-0 144 120 can be made sensitive enough to detect gamma and microwave radiation, yet stable enough not to undergo spontaneous vaporization, if the degree of droplet superheat is kept within the narrow range of from 0.4 to about 1 MPa (4 to 10 atmospheres), preferably from about 0.8 to about 1 MPa (8 to 10 atm) in the case of microwave sensitivity. This contrasts with values in the range 0.15 to 0.4 MPa (1.5 to 4 atm) for the neutron detectors described in EP-A-0 144 120, and which are too low to provide microwave and gamma sensitivity. At the other end of the scale, however, degrees of superheat above about 1.2 MPa (12 atmospheres) result in instability and spontaneous vaporization.

As used herein the degree of superheat of the liquid droplets is expressed in terms of the different pressure ($\Delta P$) of the droplets, where $\Delta P = Pl - P$ where $Pl$ is the inherent vapour pressure of the detector liquid and $P$ is the applied pressure.

After use the microwave and/or gamma radiation detectors and dosimeters of the present invention can be reactivated and recharged by following exposure to the activating radiation by condensing the vapour bubbles back into droplet form and again superheating the droplets to within the range 0.4 to 1 MPa (4 to 10 atm).

Droplets condensed after vaporization in use have been found to be sufficiently larger than the original droplets to permit discrimination thereof e.g. for cumulative dose determination after reuse.

The invention is further described with reference to the accompanying drawings, in which:

Figure 1 is a schematic diagram of a magnified detector liquid droplet D of radius R in a solid medium M under applied pressure P. Inside the liquide droplet D is shown a small vapour bubble B of radius r, the size of B being much exaggerated.

Figure 2 is a graph showing the degree of superheat of the detector liquid droplets (abscissa) and their sensitivity to Co-60 gamma rays (ordinate) at four temperatures. The gamma detection threshold and the spontaneous nucleation commencement are indicated.

Figure 3 is a diagram depicting the regions of the degree of superheat of the droplets and the types of radiation which were found to trigger vaporization in these regions.

Figure 4 is a graph for variation of sensitivity of the detector (in bubbles vaporized per mrem of radiation) over time in use (in days). The central dot indicates the average for 5 detector samples and the vertical line the range of the 5 readings.

Figure 5 is a graph showing the response in bubbles per mrem of a detector at different temperatures exposed to Cs-137 gamma rays.

The modifications to the neturon detector of Ing et al (EP-A-0 144 120) that would be required for the proposed gamma/microwave detector are (a) to make such detectors sensitive to gamma rays and to microwaves while being stable against spontaneous nucleation, and (b) to make such detectors reuseable while retaining a total record of the readings.

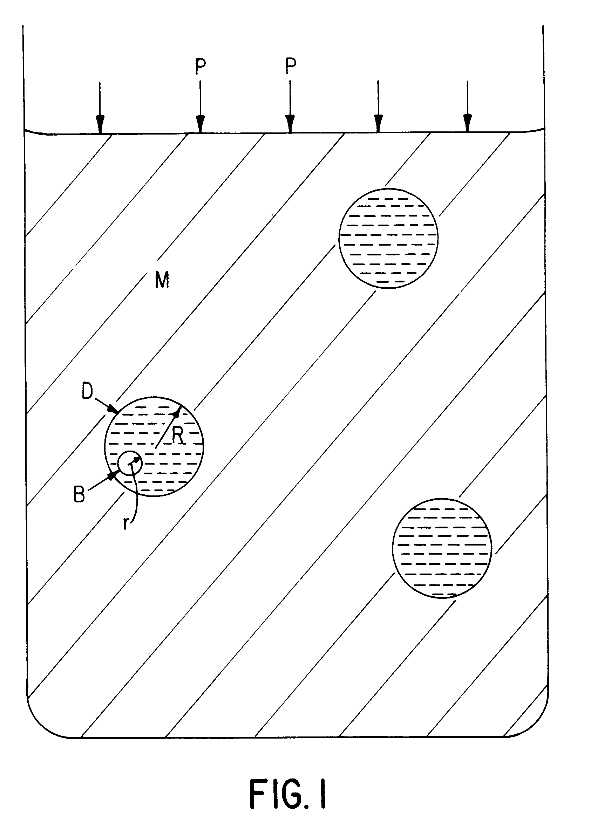

To make the neutron detector of Ing et al sensitive to gamma rays and/or microwaves, it is necessary to know how to make the detector more sensitive in terms of reducing the amount of energy density in the medium required to cause the droplets to explode. Figure 1 shows a schematic diagram of magnified detector liquid droplet of radius R is a solid elastic medium M. Inside the liquid droplet is a small vapour bubble of detector liquid of radius r. If this vapour bubble, formed by radiation, exceeds a critical size of radius rc, the vapour bubble will grow and the droplet will "explode". If the bubble is below the critical size, the bubble will shrink under the surface tension of the detector liquid and disappear. In this case, the radiation will not be detected because it did not produce enough energy density to create a large enough vapour bubble. The smaller the critical radius, the less energy density is required to create the critical bubble and the more sensitive is the detector to lightly ionizing radiation.

The relationship between the critical radius rc and the detector property is given by

$$rc = \frac{2\gamma^{\ell}}{P\ell - P - \frac{2\gamma^{\ell M}}{R}} \qquad (I)$$

where $\gamma^{\ell}$ is the surface tension between the detector liquid and its own vapour, $\gamma^{\ell M}$ is the surface tension between the detector liquid and the detector medium, $P\ell$ is the inherent vapour pressure of the detector liquid (which is a strong function of temperature) and P is the applied pressure on the elastic medium. Derivation of this equation follows from the analysis by J.W. Gibbs (Transactions of Connecticut Academy of Arts & Sciences (1878) p. 343).

In the earlier detectors developed by Ing et al, the values of $\Delta P = P\ell - p$ were in the range of 0.15 to 0.4 MPa (1.5 to 4 atm). Such detectors were not sensitive to gamma rays.

In order to make the detectors sensitive to gamma radiation, rc must be made smaller. This is most simply done by increasing $P\ell$, although some other solutions such as choosing a detector liquid with smaller $\gamma^{\ell}$ or $\gamma^{\ell M}$, reducing P, and increasing R would also work in the proper direction.

Referring to the drawings in more detail:

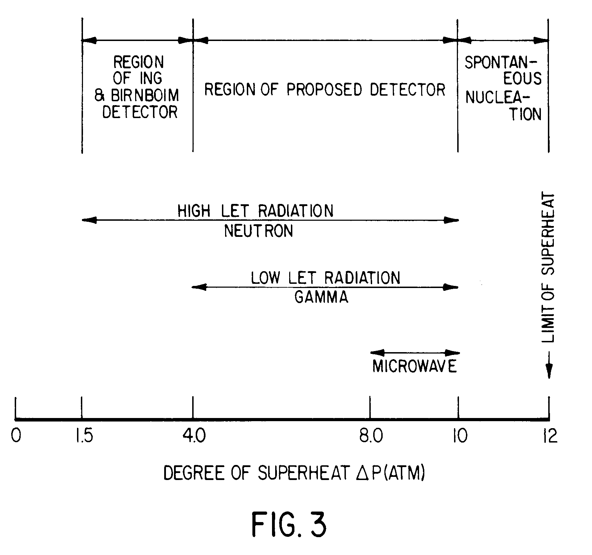

Figure 3 illustrates the general detection properties of the herein described detectors to various types of radiation. The numerical values of superheats shown are indicative of the particular type of detector medium, droplet size and detector liquid ($CF_2ClCF_3$) that were used. If these conditions are changed, the numerical values would vary, but the different regions of detector operations would be similar. In these particular detectors, the superheat region for pratical use as a radiation detector spans about 0.15 to 1 MPa (1.5 to 10 atm). Below 0.15 MPa (1.5 atm), the detector will not detect recoil nuclei such as H, C, O, F and Cl from neutron interactions, although it may be sensitive to heavier elements. Above about 1 MPa (10 atm), the detector becomes increasingly unstable against forming bubbles without being irradiated such that at a superheat of about 1.2 MPa (12 atm), the detector will form bubbles within minutes after being switched to the radiation sensitive state. Above a superheat of 0.15 Mpa (1.5 atm), the detector will detect neutrons, becoming more and more sensitive to recoil charge particles of decreasing LET from the neutron interactions as $\Delta P$ increases. This range of $\Delta P = 0.15$ to 0.4 MPa (1.5 to 4 atm) was used in the neutron detector if Ing and Birnboim. It has now been found that above 0.4 MPa (4 atm), selected detectors begin to detect gamma rays. As the superheat increases, electrons of lower and lower LET become detectable and, therefore, the sensitivity to gamma rays rises. Sensitivity to microwaves was found to start at $\Delta P$ of about 0.8 MPa (8 atm). There appears to be no problem having detectors that are stable enough even for microwave detection.

In addition to gamma and microwave radiation, the droplet-in-elastic solid system can be selected to be sensitive to other radiations which produce low energy density in the medium including beta, muons, UV, and ultrasonic radiation, i.e. any such radiation able to penetrate the solid medium. The degree of superheat is controlled to be above the detection threshold for the radiation to be sensed, i.e. the higher the superheat, the less the energy density required to trigger volatilization.

It has been found that the following criteria are important in selecting the detector liquid:

(i) it must be relatively insoluble in the solid medium (and vice versa), and unreactive therewith;

(ii) it must have a very high vapour pressure in order to provide the high degree of superheat required;

(iii) it must be chemically inert and stable against decomposition at the temperatures and pressures necessary;

(iv) preferably it must boil within the temperature range of about -100°C to +100°C and condense within the same range (at atmospheric pressure) to be most effective; and

(v) preferably, be non-toxic.

Suitable detector liquids include volatile hydrocarbons, and halogenated hydrocarbons, particularly volatile fluorinated and/or chlorinated hydrocarbons. Examples include pentafluorochloroethane, octafluorocyclobutane, perfluoropropane and hexafluoroethane.

Mixtures of liquids are very appropriate especially when one component is chosen to comprise hexafluoroethane and another to comprise perfluorobutane.

It has been found that mixtures wherein at least one component is selected from dichlorotetrafluoroethane, dichlorodifluoromethane, hexafluoroethane, perfluorobutane, perfluoropropane, octafluorocyclobutane and pentafluorochloroethane, are preferred in many applications. One mixture found very suitable is a mixture of hexafluoroethane and perfluorobutane in the wt. ratio range from about 20:80 to about 40:60 respectively.

Any elastic substantially transparent or translucent solid medium in which detector liquid droplets can be dispersed, may be used. It is preferable to use a liquid precursor of the solid (such as a liquid monomer or polymer solution which can be polymerized or cross-linked to elastic solid form) as a continuous medium into which the detector liquid can be dispersed or emulsified. The liquid precursor is then polymerized or cross-linked to entrap the dispersed droplets of detector liquid. Vinylic monomers are suitable, e.g. acrylics such as acrylamides and methylmethacrylate, vinyl alcohol, vinylethylcarbitol, vinylpyrrolidone, styrene-divinylbenzene, etc. Solutions of monomers, polymers or mixtures thereof in which the detector liquid is insoluble are preferred, e.g. aqueous solutions of acrylamide plus a bisacrylamide. Solutions of polymers such as dextran or agarose wherein the polymer can be cross-linked in situ to form an elastic solid continuous phase can also be used.

Solvent in the precursor liquid preferably is aqueous but could be selected from other solvents such as alcohols, acetonitrile, dimethylformamide, dimethylsulfoxide and dioxane (when used with an insoluble detector liquid). Boron chloride (liquid) could also be used.

Various polymerization catalysts and cross-linking agents known to the art can be used. These will include ammonium persulfate, radiation to which the detector liquid is insensitive, peroxides, ethylenediacrylate, riboflavin + light, tetramethylethylenediamine, etc.

The amount of the discrete droplets may be varied over a wide range to suit the particular application. Normally the amount of the droplets will be within the range of about 0.02 to about 30% by vol. The droplet size is not critical but usually will be within the range of about 0.1 to about 150 microns diameter. For gamma or microwave radiation it has been found that the optimum size will depend on the incident radiation: usually this optimum will be within the range of about 1 to about 100 microns preferably 10 microns.

The following is an example of one approach to preparing the gamma detector. Aqueous solutions of water-soluble monomers and heavy solutes can be caused to polymerize by addition of suitable catalysts to form a firm elastic medium. Prior to polymerization, the detector liquid is added. Because the detector liquid has a low boiling point, the monomer solution is cooled sufficiently to delay polymerization and also to allow addition of the detector liquid at ambient pressure. The screw-cap glass tube (or other suitable container) containing these agents is sealed and warmed slightly, preferably with vigorous vortex mixing. As the aqueous solution warms or melts, the water-insoluble detector liquid is blended in to form a fairly uniform suspension of droplets. These droplets in many cases would settle out if the density of the aqueous solution were not closely matched to the density of the detector liquid, e.g. by prior addition of heavy solutes, preferably a cesium salt. Excess detector liquid is then added at a temperature below its boiling point without further mixing. After sealing the container and standing at about 15°C for about 5-10 mins, the resultant detector is a firm, elastic, translucent medium, polymerized in situ, which is stable for at least seven weeks. It is activated (made sensitive to radiation) by pouring off excess detector liquid which decreases the internal pressure and causes superheating of the detector droplets.

In preparing the detector or dosimeter, we have found that after the detector liquid is added, it is not necessary to mix actively the detector liquid as droplets throughout the liquid precursor: sufficient dispersion takes place passively from an overlay of detector liquid so that droplets are formed in situ.

Detectors formed by this simpler procedure have lower sensitivity but are useful in some applications.

The detector/dosimeter may be used with or without appropriate containing means. Normally a container which can be pressurized will be used to increase storage life and the pressure released to activate the system.

Irradiation by gamma or microwave causes volatilization of the droplets and the rapid formation of small bubbles within the host detector medium which cause local deformation. The bubbles remain at their sites and can be counted visually or by other means. Deformation sites can also be used as a method of dosimeter reading. The use of these firm, elastic, radiation-penetrable, translucent hosts (polyacrylamide is an example) has many advantages over the prior art. For instance these systems:

(1) are firm, elastic, stable, non-biodegradable and can readily be prepared in containers or moulds of any suitable shape,

(2) allow wide flexibility in the preparation of host detection media with different strengths and elastic properties,

(3) can be assembled at low temperatures, even in the frozen state, in sealed or unsealed vessels, then uniformly dispersed and allowed to set in situ,

(4) allow the addition of other ingredients such as metal salts to give desirable characteristics to the radiation response,

(5) are translucent and allow the number of bubbles resulting from the interaction to be used as a measure of radiation fluence or dose,

(6) are firm yet elastic and confine the bubbles even for long periods of time under appropriate conditions, e.g. under an overlay of heavy liquid. Softer media would allow bubbles to migrate and coalesce destroying a linear relationship between bubble number and radiation dose,

(7) in the firmer solid media, local, fractural damage leaves an essentially permanent record of dose reading, such damage being the result of volatilization of droplets causing surrounding host material to be distorted beyond its elastic limit,

(8) after preparation they can be removed from the container and cut into any suitable configuration for use. Softer media (non-solid) require special containers to support the host medium and the container is an inseparable part of any detector using such media.

In the less firm, more elastic solid media, the gas bubbles formed after radiation exposure are more stable than in the firmer media. Bubble stability could be extended e.g. to 3-4 months, by overlaying with one or more layers of liquid such as a concentrated metal salt (e.g. cesium chloride) solution, liquid mercury or a highly volatile liquid such as Freon 114 (dichlorodifluoromethane). When these overlayers are present increased post-exposure stability and prolonged readability result. In cases where the bubbles apparently had collapsed or disappeared, it was found that they could be caused to re-appear throughout the solid medium by reducing the external pressure.

These overlay liquids may be concentrated solutions of metal salts such as cesium chloride, cesium carbonate, cesium formate, rubidium bromide and lithium bromide, or mercury (liquid). These salts may also serve as heavy solutes in adjusting the density of precursor during the preparation.

Recharging and Cumulative Dose Determination

In order to make the detector reusable and to be able to retain information from each exposure, it is necessary to make the medium elastic enough so that the bubble from the droplet explosion does not stretch the medium beyond its elastic limit. In this case, no permanent damage of the medium is caused by the explosion and the bubble can be recompressed into a droplet at any convenient time after a radiation exposure by the use of high pressure. However, immediately after a droplet explosion, it has been observed that the bubble grows rapidly because the bubble is fed by dissolved detector liquid always present in the detector medium. Thus, when the bubble is recompressed, the resulting droplet is noticeably larger than the initial virgin droplet (because of the added gas) and can easily be identified as a droplet which had already exploded. Since there are numerous droplets in each detector, the effect of having a tiny fraction of its droplets increased in size, has negligible effect on the overall detection efficiency of the detector on recompression and re-use.

Thus such a detector can be used, recompressed and be reused many times. At the same time, the totality of all the bubbles produced is recorded cumulatively in the detector in the form of enlarged droplets.

The cumulative dose can be determined by counting the totality of enlarged droplets by visual or other means.

The following examples are illustrative.

EXAMPLE 1

Reagents

A. Acrylamide Solution

Acrylamide (50 g), methylenebisacrylamide (3.7 g) and 12.5 g of 1 M sodium phosphate buffer (pH 6.8) were dissolved in double distilled water (final volume was 250 ml). The solution was clarified by passage through a 0.45 micron membrane filter.

C. Saturated Cesium Chloride Solution

50 g of CsCl were added to 25 ml of double distilled water. They were mixed and left to stand at room temperature for at least 30 min.

D. Detector Liquid

Pentafluorochloroethane was collected and held in a test tube prechilled in a dry ice/ethanol bath.

P. Ammonium persulfate

A 10% solution (w/v) was prepared weekly and stored at 4°C.

Preparation of Detector

Solutions A and C were mixed in proportions to match the density of the detecter liquid D. Appropriate volumes were determined by trial and error by mixing A and C in different ratios, and adding these mixtures to a screw cap test tube along with a small volume of D. Proper precautions were taken against explosion if a high vapour pressure was expected from mixing. The appropriate ratio of A and C in the mixture is one in which D hovers and neither sinks nor floats. 2ml of the mixture was then transferred to a 13 x 100 mm screw cap test tune and 0.02 ml of solutions P added.

The contents of the test tube were then outgassed using a water aspirator as a vacuum source. 0.02 ml of tetramethylenediamine (TEMED) were then added and mixed thoroughly but gently to avoid re-aeration of the sample. The contents of the tube were then frozen in a dry ice/ethanol bath.

The desired volume of D was then added to the tube and the cap secured. For a volume of A and C of 2 ml, the volume of D was usually arranged to be about 0.1 ml.

The contents of the tube were warmed in a water bath at room temperature until the contents were partially thawed. The contents were then vortexed vigorously as they thawed to obtain a substantially uniform dispersion of D as fine droplets. The contents were then frozen again in the dry ice/ethanol bath.

The tube was then uncapped and 0.7 ml of D was added. The cap was then resecured. The tube and contents were handled gently to avoid any shaking.

The tube and contents were transferred to a water bath at 15°C to allow the contents to thaw and polymerization to occur. Polymerization was visible after 5-10 minutes and was complete by 60 minutes. The detector is stable as long as excess D remains. The detector is activated by uncapping the tube, pouring off D and either recapping immediately or after the addition of another liquid having a lower vapour pressure.

EXAMPLE 2

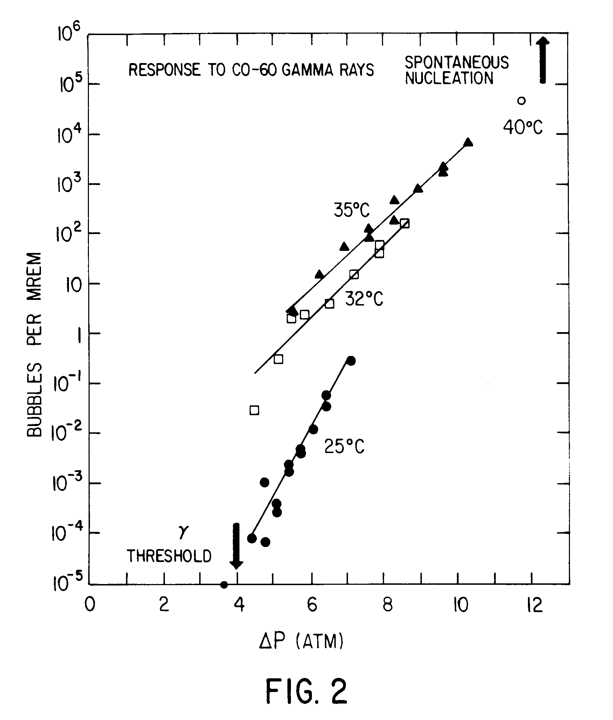

Fig. 2 shows the results of an experiment to demonstrate the detector's ability to detect radiation of decreasing LET (i.e. lightly ionizing particles) as $\Delta P = P\ell - P$ is increased. In this experiment, we have embedded droplets of very high pressure detector liquid ($CClF_2CF_3$) in a polyacrylamide polymer medium as described above. The pressure of the detector liquid $P\ell$ was varied by controlling the temperature in the detector and P (the applied pressure on the elastic medium) was varied by applying different pressure of nitrogen on the detector. The results show that for this type of detector, ability to detect $^{60}Co$ gamma rays starts at $\Delta P$ of about 0.4 MPa (4 atm). For $\Delta P$ of about 1.2 MPa (12 atm), this type of detector undergoes spontaneous nucleation because the normal thermal motion of molecules provides sufficient energy to cause the droplets to explose. The 3 curves shown in Fig. 2 were obtained by varying P while the detector was kept at three different temperatures (25°, 32° and 35°C). The reason that the curves do not join smoothly is because of the term

$$\frac{2\gamma \ell M}{R}$$

[ref. eq. (1)] which depends on the temperature of the detector. The sensitivity is given in terms of the number of bubbles in the detector after exposure to $1 \times 10^{-6}$ Sievert (1 mrem) of $^{60}$Co gamma rays (along the ordinate in Fig. 2). These results also provide evidence that it is possible to make practical, stable detectors using superheated liquid droplets in an elastic medium such that gamma rays can be detected with an enormous range of sensitivities.

EXAMPLE 3

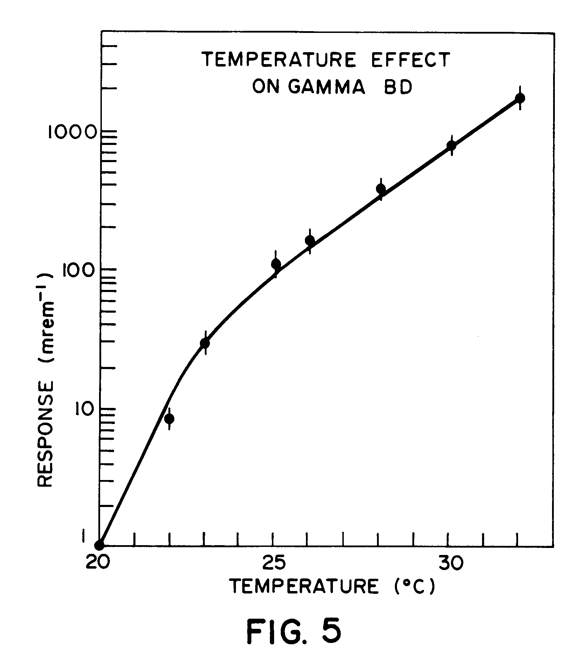

Figure 5 shows the response (in bubbles per mrem) of a similar detector to that of Ex. 2, when irradiated with gamma rays from $^{137}$Cs at different temperatures. The response can be easily varied from 10 bubbles per $1 \times 10^{-6}$ Sievert (1 mrem) to over 1000 bubbles per $1 \times 10^{-6}$ Sievert (1 mrem) by varying the temperature of the detector.

EXAMPLE 4

The detector was prepared as described in Example 1. The detector was exposed to 15 mW/cm² of microwave radiation with the detector at room temperature of approximately 21°C. At this temperature, the degree of superheat was approximately 7 atmspheres. No bubbles were observed at 10 minutes of exposure to the microwave radiation. When this detector was warmed to a temperature of 33°C ($\Delta P$ = 0.9 MPa (9 atm.) and exposed to 14mW/cm² of microwave radiation a large number of droplets were vapourized into bubbles (about 25% of droplets present). This detector was in a glass tube and the lower part of the tube was shielded from the radiation. A sharp line of demarcation was observed between the irradiated and non-irradiated parts of the detector with the lower part being free of bubbles, which showed that the induced nucleation was from microwave interaction with the droplets as opposed to nucleation resulting from bulk heating of the medium.

EXAMPLE 5

In other experiments, five detectors, prepared as described in Example 1, were warmed to a temperature of 34°C (giving a degree of superheat of about 0.9 MPa (9 atm) and were exposed consecutively to a 15 mW/cm² microwave field for varying periods of time. The percentage of droplets which nucleated and vapourized was as follows.

TABLE 1

| Time of Exposure (min) | Percentage of Droplets Nucleated |
|:---:|:---:|
| 4 | < 1 |
| 5 | 10 |
| 6 | 25 |
| 7 | 50 |
| 10 | 50 |

Tests done at two different microwave frequencies (2.4 and 3.0 GHz) showed similar results. A very useful sensitivity to microwave radiation was evidenced.

EXAMPLE 6

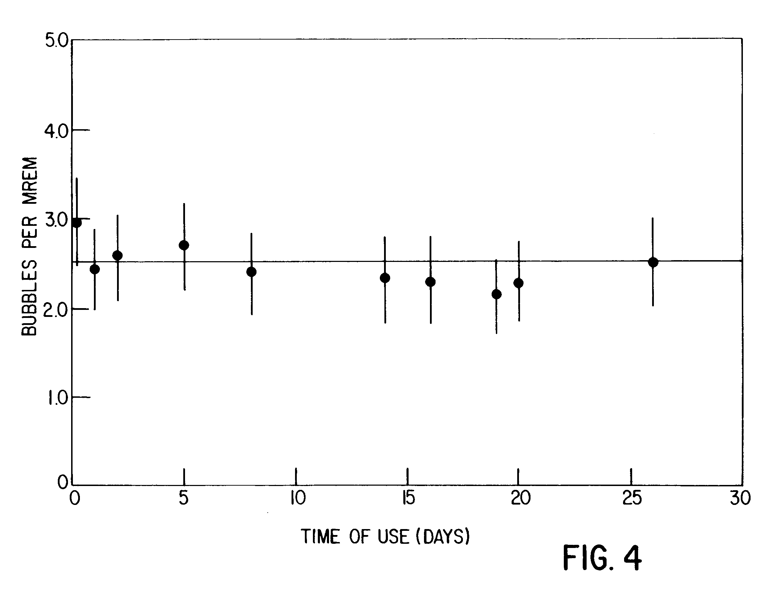

Fig. 4 shows the results for five detectors (prepared as in Example 1) which were exposed to a known radiation field (including gamma) for an eight-hour working day, recompressed and reused the following day. The detectors were cycled in this manner for several weeks. The results shows that the detection sensitivity remained substantially unchanged over this period, proving that such detectors are reusable.

These detectors will be stable for up to about 48 hours after activation. The stability can be extended by recompressing the detector every 24 hours. I have recharged and re-used the same detectors as many as 20 times without serious loss of sensitivity.

The detectors and dosimeters described herein are intended to permit both qualitative and quantitative measurements of gamma and at the higher levels of droplet superheat, microwave radiation: they will detect the presence of such radiation and give a direct indication thereof, and also give a measure of dose when the number of bubbles is counted, e.g. by a video projection type counter.

The device may be used in the form of film for radiography, or in the form of coins, cylinders or blocks for application as detectors or dosimeters in particular situations.

It is possible to use an array of three separate films or blocks in the one detector and dosimeter each having a different droplet superheat level chosen within the ranges 0.15 to 0.4 MPa, 0.4 to 0.8 MPa and 0.8 to 1 MPa (1.5 to 4 atm., 4 to 8 atm. and 8 to 10 atm.) such that neutron, gamma and microwave are detected concurrently (see Fig. 3). These devices are most advantageous in situations where a high degree of portability and freedom from external power sources are required.

| REFERENCE NO. | BIBLIOGRAPHY |
|---|---|
| 1. | World Health Organization, Environmental Health Criteria 16, Radio-frequency and Microwaves (World Health Organization, Geneva, 1981) p. 40 - 42. |
| 2. | E. Fenyves and O. Haiman, The Physical Principles of Nuclear Radiation Measurements (Academic Press, New York, 1969) chapter 4. |
| 3. | A. F. McKinlay, Thermoluminescence Dosimetry (Adam Hilger Ltd. 1981). |
| 4. | K. Becker, Solid State Dosimetry (CRC Press, Cleveland, Ohio, 1973) chapter 6. |
| 5. | G. Portal, A. Scharmann and G. Swindell, Exoelectron Emission and Its Applications, Rad. Prot. Dos. 4. (Nucl. Tech. Put, Ashford, England, 1983). |
| 6. | National Bureau of Standards, "Measurement of Absorbed Dose of Neutrons, and of Mixtures of Neutrons and Gamma Rays" National Bureau of Standards Handbook 75 (1961) 42 - 46. |
| 7. | H. Francois, E. D. Gupton, R. Maushart, E. Piesch, S. Somasundaram and Z. Spurny, Personnel Dosimetry Systems for External Radiation Exposures, IAEA Technical Report 109 (IAEA, Vienna, 1970) p. 94 -102. |
| 8. | S. Kronenberg, W. McLaughlin and C. R. Siebentritt, "Broad-Range Dosimetry With Leuko Dye Optical Waveguides" Nucl. Inst. Meth. 190 (1981) p. 365 - 368. |
| 9. | B. Gross, in "Topics in Applied Physics": Electrets, Vol. 33 (ed. G. M. Sessler) (Berlin: Springer Verlag). |
| 10. | H. Bauser and W. Ronge, "The Electret Ionization Chamber: A Dosimeter for Long Term Personnel Monitoring." Health Physics, 34 (1978) 97 - 102. |

**Claims**

1.  A direct reading radiation detector and dosimeter of the kind comprising a dispersion of discrete droplets (D) of a superheated detector liquid dispersed in a transparent or translucent elastic solid medium (M) and maintained therein under a sufficient pressure (P) to maintain the superheated droplets in liquid form in the absence of impingement by the radiation to he detected but being vapourisable in situ in the solid upon impact by said radiation to provide a visible display of vapour

9

bubbles (B) trapped in the elastic solid medium, the number of bubbles in said display being proportional to the intensity of the impinging radiation, characterised in that the differential pressure ($\Delta$P) of the liquid droplets as given by the formula

$$\Delta P = PI - P$$

where PI is the inherent vapour pressure of the detector liquid and P is the applied pressure, is in the range 0.4 to 1 MPa thereby to provide a detector that is sensitive to gamma and/or microwave radiation.

2. A detector and dosimeter according to claim 1, characterised in that the said differential pressure ($\Delta$P) is in the range 0.8 to 1 MPa thereby to provide a stable radiation detector that is sensitive to both gamma and microwave sensitivity.

3. A detector and dosimeter according to claim 1 or 2, characterised in that the detector liquid is pentafluorochlorethane, octafluorocyclobutane, perfluoropropane or hexafluoroethane.

4. A detector and dosimeter according to claim 1 or 2, characterised in that the detector liquid is a mixture including at least one component selected from dichlorotetrafluoroethane, dichlorodifluoromethane, hexafluoroethane, perfluorobutane, perfluoropropane, octafluorocyclobutane and pentafluorochloroethane.

5. A detector and dosimeter according to claim 4, characterised in that the detector liquid is a mixture of two liquids from the specified list.

6. A detector and dosimeter according to claim 5, characterised in that the detector liquid is a mixture of hexafluoroethane and perfluorobutane in a weight ratio of from 20:80 to 40:60.

7. A detector and dosimeter according to any one of the preceding claims, characterised in that the solid medium is a polymer formed from acrylic or vinylic monomers.

8. A detector and dosimeter according to claim 7, characterised in that the solid medium is a copolymer of acrylamide and bisacrylamide.

9. A detector and dosimeter according to any one of the preceding claims, characterised in that the droplets are present in said solid medium in an amount of from 0.02 to 30% by volume.

10. A detector and dosimeter according to any one of the preceding claims, characterised in that the droplet size is in the range 0.1 to 150 $\mu$m.

11. A composite array comprising plurality of detectors according to any one of the preceding claims selected to sense a plurality of radiation types concurrently.

12. A method for the manufacture and activation of a radiation detector and dosimeter of the kind comprising a dispersion of discrete droplets (D) of a superheated detector liquid dispersed in a transparent or translucent elastic solid medium (M) and maintained therein under a sufficient pressure (P) to maintain the superheated droplets in liquid form in the absence of impingement by the radiation to be detected but being vapourisable in situ in the solid upon impact by said radiation to provide a visible display of vapour bubbles (B) trapped in the elastic solid medium, the number of bubbles in said display being proportional to the intensity of the impinging radiation, which comprises:
    a) forming a dispersion comprising said detector liquid as a disperse phase of discrete droplets in suspension in a polymerisable liquid medium which, when polymerised, provides the transparent or translucent elastic solid;
    b) polymerising the said liquid medium containing the dispersed droplets to provide a polymerised, transparent or translucent elastic solid comprising said droplets as a disperse phase therein; and
    c) activating the detector by applying heat to the polymerised medium or by reducing the pressure applied thereto, thereby to put the dispersed liquid droplets into a superheated condition;
       characterised in that step c) the dispersed droplets are superheated to a degree which provides a differential pressure (ΔP) given by the formula

ΔP = Pl - P

where Pl is the inherent vapour pressure of the detector liquid and P is the applied pressure, in the range 0.4 to 1 MPa, thereby to provide a detector that is sensitive to gamma and/or microwave radiation.

**13.** A method according to claim 12, characterised in that in step c) the dispersed droplets are superheated to a degree which provides a differential pressure (ΔP) in the range 0.8 to 1 MPa.

**14.** A method according to claim 12 or 13, characterised in that the detector liquid is a liquid or liquid mixture as required by any one of claims 3 to 6 and/or has a droplet size as required by claim 10.

**15.** A method according to claim 12, 13 or 14, characterised in that the polymerisable medium comprises acrylic or vinylic monomers, preferably a mixture of acrylamide and bisacrylamide.

**16.** A method of reactivating a radiation detector and dosimeter according to any one of claims 1 to 10 following exposure to an activating radiation, which comprises recondensing the vapourised droplets, and reactivating the detector by applying heat or reducing the pressure to reestablish the dispersion of superheated droplets in the transparent or translucent elastic medium at said differential pressure (ΔP) of from 0.4 to 1 MPa.

**Patentansprüche**

**1.** Strahlungsdetektor und -dosimeter für direkte Ablesung der Art, die eine Dispersion einzelner Tröpfchen (D) einer überhitzten Detektorflüssigkeit aufweist, die in einem transparenten oder durchscheinenden elastischen festen Medium (M) dispergiert sind und darin unter einem ausreichenden Druck (P) gehalten werden, um die überhitzten Tröpfchen in flüssiger Form in Abwesenheit eines Aufpralls durch die zu ermittelnde Strahlung zu halten, die aber in situ in dem Feststoff beim Auftreffen dieser Strahlung verdampfbar sind, um eine sichtbare Anzeige von in dem elastischen festen Medium eingeschlossenen Dampfblasen (B) zu liefern, wobei die Anzahl von Blasen in dieser Anzeige proportional zur intensität der auftreffenden Strahlung ist, **dadurch gekennzeichnet,** daß der Differenzdruck (ΔP) der flüssigen Tröpfchen gemäß der Formel

ΔP = P1 - P

worin P1 der Eigendampfdruck der Detektorflüssigkeit und P der aufgebrachte Druck ist, im Bereich von 0,4 bis 1 MPa liegt, um so einen Detektor zu bekommen, der gegen Gamma- und Mikrowellenstrahlung empfindlich ist.

**2.** Detektor und Dosimeter nach Anspruch 1, **dadurch gekennzeichnet,** daß der Differenzdruck (ΔP) im Bereich von 0,8 bis 1 MPa liegt, um so einen stabilen Strahlungsdetektor zu bekommen,der sowohl gegen Gamma- als auch gegen Mikrowellenstrahlung empfindlich ist.

**3.** Detektor und Dosimeter nach Anspruch 1 oder 2, **dadurch gekennzeichnet,** daß die Detektorflüssigkeit Pentafluorchlorethan, Octafluorcyclobutan, Perfluorpropan oder Hexafluorethan ist.

**4.** Detektor und Dosimeter nach Anspruch 1 oder 2, **dadurch gekennzeichnet,** daß die Detektorflüssigkeit ein Gemisch ist, welches wenigstens eine Komponente von Dichlortetrafluorethan, Dichlordifluormethan, Hexafluorethan, Perfluorbutan, Perfluorpropan, Octafluorcyclobutan und Pentafluorchlorethan enthält.

**5.** Detektor und Dosimeter nach Anspruch 4, **dadurch gekennzeichnet,** daß die Detektorflüssigkeit ein Gemisch von zwei Flüssigkeiten aus der angegebenen Liste ist.

**6.** Detektor und Dosimeter nach Anspruch 5, **dadurch gekennzeichnet,** daß die Detektorflüssigkeit ein Gemisch von Hexafluorethan und Perfluorbutan in einem Gewichtsverhältnis von 20 : 80 bis 40 : 60 ist.

**7.** Detektor und Dosimeter nach einem der vorausgehenden Ansprüche, **dadurch gekennzeichnet,** daß das feste Medium ein von Acryl- oder Vinylmonomeren gebildetes Polymer ist.

**8.** Detektor und Dosimeter nach Anspruch 7, **dadurch gekennzeichnet,** daß das feste Medium ein Copolymer von Acrylamid und Bisacrylamid ist.

**9.** Detektor und Dosimeter nach einem der vorausgehenden Ansprüche, **dadurch gekennzeichnet,** daß die Tröpfchen in dem festen Medium in einer Menge von 0,02 bis 30 Vol.-% vorliegen.

**10.** Detektor und Dosimeter nach einem der vorausgehenden Ansprüche, **dadurch gekennzeichnet,** daß die Tröpfchengröße im Bereich von 0,1 bis 150 $\mu$m liegt.

**11.** Zusammengesetzte Anordnung mit mehreren Detektoren nach einem der vorausgehenden Ansprüche, ausgewählt, um mehrere Strahlungstypen gleichzeitig abzufühlen.

**12.** Verfahren zur Herstellung und Aktivierung eines Strahlungsdetektors und -dosimeters der Art, die eine Dispersion von einzelnen Tröpfchen (D) einer überhitzten Detektorflüssigkeit aufweist, die in einem transparenten oder durchscheinenden elastischen festen Medium (M) dispergiert sind und darin unter einem ausreichenden Druck (P) gehalten werden, um die überhitzten Tröpfchen in Abwesenheit eines Auftreffens der festzustellenden Strahlung in flüssiger Form gehalten werden, aber in situ in dem Feststoff beim Auftreffen dieser Strahlung verdampfbar sind, um eine sichtbare Anzeige von in dem elastischen festen Medium eingeschlossenen Dampfblasen (B) zu bekommen, wobei die Anzahl der Blasen in der Anzeige proportional zu der Intensität der auftreffenden Strahlung ist, indem man
    a) eine Dispersion bildet, die die Detektorflüssigkeit als eine disperse Phase einzelner Tröpfchen in Suspension in einem polymerisierbaren flüssigen Medium umfaßt, welches beim Polymerisieren den transparenten oder durchscheinenden elastischen Feststoff bildet,
    b) das flüssige, die dispergierten Tröpfchen enthaltende Medium polymerisiert, um einen polymerisierten, transparenten oder durchscheinenden elastischen Feststoff zu bekommen, der die Tröpfchen als eine disperse Phase darin enthält, und
    c) den Detektor aktiviert, indem man dem polymerisierten Medium Wärme zuführt oder den auf es ausgeübten Druck vermindert, um so die dispergierten flüssigen Tröpfchen in einen überhitzten Zustand zu bringen, **dadurch gekennzeichnet,** daß in der Stufe (c) die dispergierten Tröpfchen in einem Maße überhitzt werden, welches einen Diferenzdruck ($\Delta$P) gemäß der Formel

$$\Delta P = P1 - P$$

worin P1 der Eigendampfdruck der Detektorflüssigkeit und P der aufgebrachte Druck ist, im Bereich von 0,4 bis 1 MPa ergibt, um so einen Detektor zu bekommen, der gegen Gamma- und/oder Mikrowellenstrahlung empfindlich ist.

**13.** Verfahren nach Anspruch 12, **dadurch gekennzeichnet,** daß in der Stufe (c) die dispergierten Tröpfchen in einem Maß überhitzt werden, welches einen Differenzdruck ($\Delta$P) im Bereich von 0,8 bis 1 MPa ergibt.

**14.** Verfahren nach Anspruch 12 oder 13, **dadurch gekennzeichnet,** daß die Detektorflüssigkeit eine Flüssigkeit oder ein Flüssigkeitsgemisch nach einem der Ansprüche 3 bis 6 ist oder eine Tröpfchengröße nach Anspruch 10 hat.

**15.** Verfahren nach Anspruch 12, 13 oder 14, **dadurch gekennzeichnet,** daß das polymerisierbare Medium Acryl- oder Vinylmonomere, vorzugsweise ein Gemisch von Acrylamid und Bisacrylamid umfaßt.

**16.** Verfahren zur Reaktivierung eines Strahlungsdetektors und -dosimeters nach einem der Ansprüche 1 bis 10 nach Bestrahlung mit einer aktivierenden Strahlung, indem man die verdampften Tröpfchen wieder kondensiert und den Detektor reaktiviert, indem man Wärme zuführt oder den Druck reduziert, um die Dispersion überhitzter Tröpfchen in dem transparenten oder durchscheinenden elastischen Medium bei dem Differenzdruck ($\Delta$P) von 0,4 bis 1 MPa wieder herzustellen.

**Revendications**

1. Détecteur de radiation et dosimètre à lecture directe du type comprenant une dispersion de gouttelettes distinctes (D) d'un liquide détecteur surchauffé dispersé dans un support solide (M) élastique transparent ou translucide et qui y sont maintenues sous une pression suffisante (P) pour maintenir les gouttelettes surchauffées sous forme liquide en l'absence d'impact de la radiation à détecter mais pouvant être vaporisées in situ dans le solide lors de l'impact par ladite radiation pour fournir une présentation visible de bulles de vapeur (B) piégées dans ledit support solide élastique, le nombre de bulles dans ladite présentation étant proportionnel à l'intensité de la radiation incidente, caractérisés en ce que la pression différentielle ( P) des gouttelettes liquides, telle que donnée par la formule :

P = PI - P

où PI est la pression de vapeur intrinsèque du liquide détecteur et P est la pression appliquée, est dans la plage de 0,4 à 1 MPa, pour procurer par ce moyen un détecteur qui est sensible aux radiations gamma et/ou de micro-ondes.

2. Détecteur et dosimètre selon la revendication 1, caractérisés en ce que ladite pression différentielle ( P) est dans la plage de 0,8 à 1 MPA, pour procurer par ce moyen un détecteur de radiation stable qui est sensible à la fois à la sensibilité des rayons gamma et des micro-ondes.

3. Détecteur et dosimètre selon la revendication 1 ou la revendication 2, caractérisés en ce que le liquide détecteur est du pentafluorochloro-éthane, de l'octafluorocyclobutane, du perfluoropropane ou de l'héxafluoro-éthane.

4. Détecteur et dosimètre selon la revendication 1 ou la revendication 2, caractérisés en ce que le liquide détecteur est un mélange comprenant au moins un composant sélectionné à partir du dichlorotétrafluoro-éthane, du dichlorodifluorométhane, de l'héxafluoro-éthane, du perfluorobutane, du perfluoropropane, de l'octafluorocyclobutane et du pentafluorochloro-éthane.

5. Détecteur et dosimètre selon la revendication 4, caractérisés en ce que le liquide détecteur est un mélange de deux liquides pris dans la liste indiquée.

6. Détecteur et dosimètre selon la revendication 5, caractérisés en ce que le liquide détecteur est un mélange d'héxafluoro-éthane et de perfluorobutane dans un rapport en poids allant de 20/80 à 40/60.

7. Détecteur et dosimètre selon l'une quelconque des revendications précédentes, caractérisés en ce que le support solide est un polymère formé à partir de monomères acryliques ou vinyliques.

8. Détecteur et dosimètre selon la revendication 7, caractérisés en ce que le support solide est un copolymère d'acrylamide et de bisacrylamide.

9. Détecteur et dosimètre selon l'une quelconque des revendications précédentes, caractérisés en ce que les gouttelettes sont présentes dans ledit support solide dans une quantité allant de 0,02 à 30 % en volume.

10. Détecteur et dosimètre selon l'une quelconque des revendications précédentes, caractérisés en ce que la taille de goulette est dans la plage de 0,1 à 150 $\mu$m.

11. Réseau composite comprenant une pluralité de détecteurs selon l'une quelconque des revendications précédentes sélectionnés pour détecter concurremment une pluralité de types de radiation.

12. Procédé de fabrication et d'activation de détecteur de radiation et dosimètre, à lecture directe du type comprenant une dispersion de gouttelettes distinctes (D) d'un liquide détecteur surchauffé dispersé dans un support solide (M) élastique transparent ou translucide et qui y sont maintenues sous une pression suffisante (P) pour maintenir les gouttelettes surchauffées sous forme liquide en l'absence d'impact de la radiation à détecter mais pouvant être vaporisées in situ dans le solide lors de l'impact par ladite radiation pour fournir une présentation visible de bulles de vapeur (B) piégées dans ledit support solide élastique, le nombre de bulles dans ladite présentation étant proportionnel à l'intensité de la radiation incidente, qui comprend :

a) la formation d'une dispersion comprenant ledit liquide détecteur sous la forme d'une phase dispersée de gouttelettes distinctes en suspension dans un support liquide polymérisable, qui, lorsqu'il est polymérisé fournit le solide élastique transparent ou translucide ;

b) la polymérisation dudit support liquide contenant les gouttelettes dispersées pour former un solide élastique transparent ou translucide, polymérisé, contenant lesdites gouttelettes sous la forme d'une phase dispersée à l'intérieur ; et

c) l'activation du détecteur par application de chaleur ou par réduction de la pression qui y est appliquée pour mettre par ce moyen les gouttelettes liquides dispersées dans un étant surchauffé ;

caractérisé en ce que dans l'étape c) les gouttelettes dispersées sont surchauffées jusqu'à un point qui procure une pression différentielle ( P) donnée par la formule :

$$P = Pl - P$$

où Pl est la pression de vapeur intrinsèque du liquide détecteur et P est la pression appliquée, dans la plage de 0,4 à 1 MPa, pour procurer par ce moyen un détecteur qui est sensible aux radiations gamma et/ou de micro-ondes.

**13.** Procédé selon la revendication 12, caractérisé en ce que dans l'étape c) les gouttelettes dispersées sont surchauffées jusqu'à un point qui fournit une pression différentielle ( P) dans la plage de 0,8 à 1 MPa.

**14.** Procédé selon la revendication 12 ou la revendication 13, caractérisé en ce que le liquide détecteur est un liquide ou un mélange de liquides tel que défini par l'une quelconque des revendications 3 à 6, et/ou présente une taille de gouttelette telle que définie par la revendication 10.

**15.** Procédé selon la revendication 12, 13 ou 14, caractérisé en ce que le support polymérisable comprend des monomères acryliques ou vinyliques, d'une manière préférable un mélange d'acrylamide et de bisacrylamide.

**16.** Procédé de réactivation d'un détecteur et dosimètre selon l'une quelconque des revendications 1 à 10, à la suite de l'exposition à une radiation activante, qui comprend la recondensation des gouttelettes vaporisées, et la réactivation du détecteur par application de chaleur ou réduction de la pression pour rétablir la dispersion des gouttelettes surchauffées dans le support élastique transparent ou translucide à ladite pression différentielle ( P) allant de 0,4 à 1 MPa.

FIG. I

FIG. 2

FIG. 3

FIG. 4

TEMPERATURE EFFECT
ON GAMMA BD

FIG. 5